# EUROPEAN PATENT SPECIFICATION

(11) **EP 3 494 034 B1**
(45) Date of publication and mention of the grant of the patent: **16.12.2020**
(21) Application number: 17754642.1
(22) Date of filing: 02.08.2017
(51) Int. Cl.: B62D 55/108, B62D 55/065, B62D 55/084

(54) **TRACK SYSTEM FOR A WORK VEHICLE**
RAUPENFAHRWERKSYSTEM FÜR EIN ARBEITSFAHRZEUG
SYSTÈME DE CHENILLES POUR ENGIN DE CHANTIER

(30) Priority: 02.08.2016 IT 201600081206
(43) Date of publication of application: 12.06.2019
(73) Proprietor: CNH Industrial Italia S.P.A., 10135 Turin (IT)
(72) Inventor: STEFANO, Fiorati, 44028 Poggio Renatico (Ferrara) (IT); PAOLINI, Francesco, 41122 Modena (IT); STOLTMAN, Russell V., Frankfort Illinois 60423 (US); VIK, Brian D., Barnesville Minnesota 56514 (US)
(74) Representative: CNH Industrial IP Department
(86) International application number: PCT/EP2017/069500
(87) International publication number: WO 2018/024762

(56) References cited:
- EP-A2- 1 318 067
- AT-B- 146 854
- DE-A1-102004 059 823
- DE-C- 753 514
- GB-A- 416 548
- US-A- 4 361 363
- US-A1- 2014 138 169

## Description

The present invention relates to a track system for a tracked work vehicle, such as a construction equipment vehicle or a military tracked vehicle or an agricultural vehicle, e.g. a combined harvester or the like.

### BACKGROUND OF THE INVENTION

A tracked work vehicle is provided with a track system in order to increase adhesion and traction performances on soft grounds, such as grounds affected by a relatively high degree of humidity or grounds having a relatively high quantity of sand.

A rubber tracked vehicle is preferred to satisfy the need for a relatively high speed on paved streets, e.g. during a travel of the work vehicle to and from a construction site or a cultivated field. Furthermore, a rubber track tends to be relatively less expensive than other tracks.

The suspension is normally an undercarriage suspension and provides the highest traction performances when the track adheres the ground. Sometimes the surface layer of the ground is not uniform and bodies made of a hard material are found on or immediately below the surface of the ground, such as rocks, spare metallic construction materials such as tubes or the like. AT146854 discloses a track system for a work vehicle comprising a driving wheel, an undercarriage beam hinged to a frame of the vehicle, one idler wheel and a first and second roller wheels.

When encountering such an obstacle, it is important to find a compromise between stiffness and kinematic compliance for the design of the track-supporting idlers, rollers and structure of the suspension. Otherwise the track, in particular the rubber track, may undergo excessive wear. In particular it is important that the rollers are sufficiently constrained to provide proper support to the track when the ground is uniformly soft and are mobile enough to retract only in the near surroundings of a hard body on the ground surface. In both instances the scope is to keep or improve traction performances and, at the same time, lower the wear of the track.

### SUMMARY OF THE INVENTION

The scope of the present invention is achieved by providing a track system according to appended set of claims..

Preferably roller wheel motion limiter can be either passive, i.e. an elastic and/or damping element such as a spring, in particular a rubber or gas spring, or active to comprise an actuator.

According to a preferred embodiment tilting linkage is such to constrain the first and the second roller wheel to have a relative degree of freedom, in particular an angular degree of freedom, and the limiter is connected to tilting linkage in order to apply, at least in certain working conditions, an action to hinder the relative motion of the roller wheels with respect to said relative degree of freedom. Such hindering action can be obtained either by an elastic and/or damping action when the limiter is passive and by blocking or releasing the linkage when the limiter is an actuator. When the limiter is an actuator, it is also possible to apply a control strategy or chose the kind of actuator in order to also provide a spring and/or damping action to the linkage.

According to the invention, an existing tracked vehicle is retrofittable or be provided with a tilting linkage to attach first and second roller wheels to an undercarriage beam so that first and second roller wheels are movable one with respect to the other at least in certain working conditions, and a roller wheel motion limiter attached to the tilting linkage such that, during tilting of the linkage when climbing on an obstacle, a loading action is applied from the first to second roller wheel through the limiter to increase the pressure uniformity of the track on the ground.

Additional features of the invention are disclosed in the description and the dependent claims.

### BRIEF DESCRIPTION OF THE DRAWINGS

For a better understanding of the present invention, the latter will further be disclosed with reference to the accompanying figures in which:
- Figure 1 shows a work vehicle that can be equipped with the present invention;
- Figures 2 and 3 respectively show a sketch of a detail of the present invention in different working conditions;

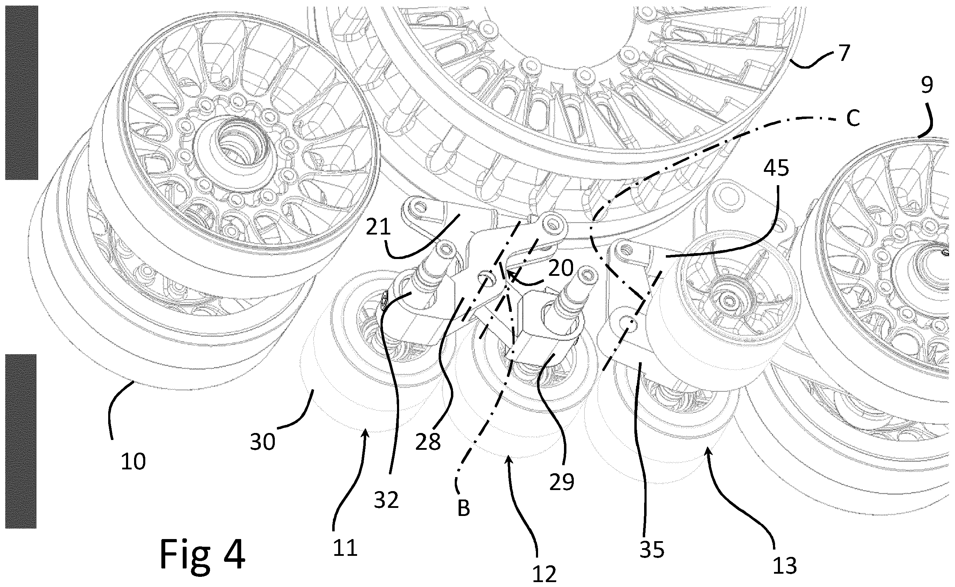

- Figure 4 is a perspective and enlarged view of a detail of figure 1, with elements omitted for clarity's sake;
- Figure 5 is a perspective and enlarged of a sub-unit shown in figure 4;

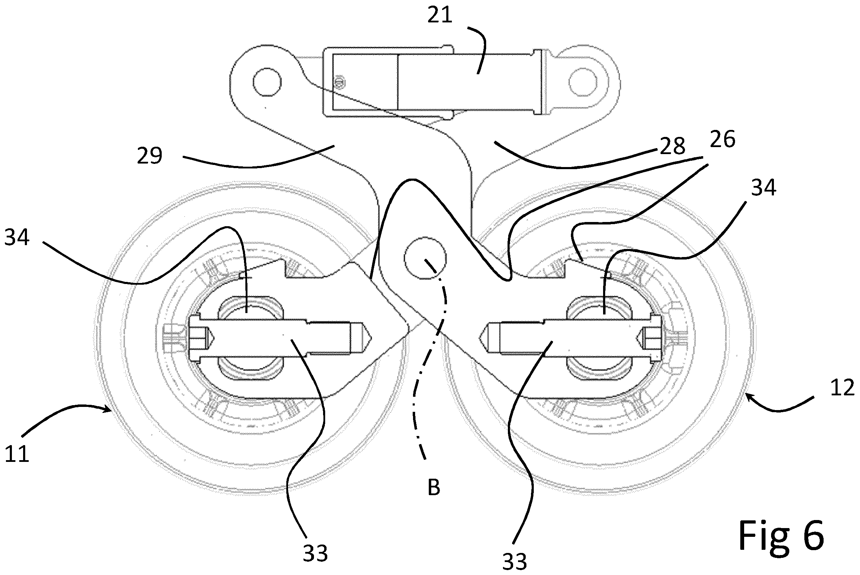

- Figure 6 is a section view of figure 5 along a plane perpendicular to the axis of the roller wheels; and
- Figure 7 is a partial lateral view of a detail of a track system according to the present invention.

### DETAILED DESCRIPTION OF THE DRAWINGS

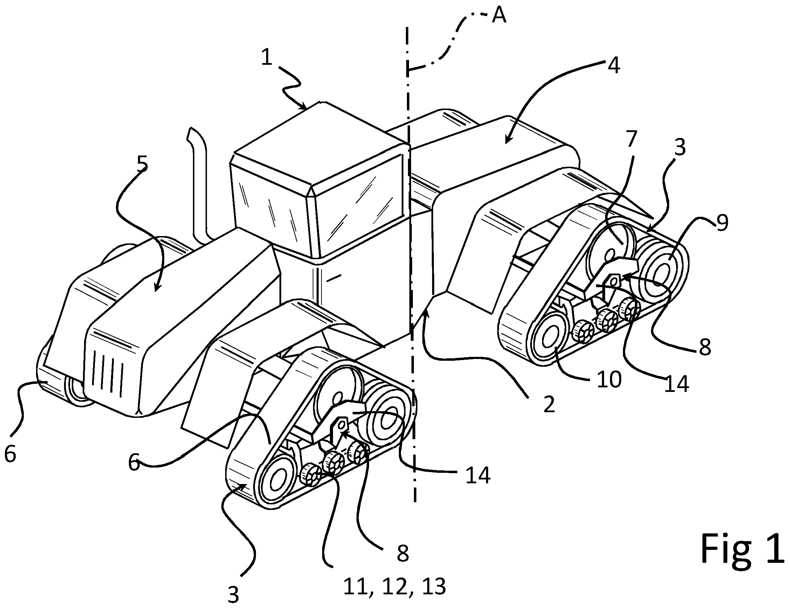

Figure 1 refers, as a whole, to a work vehicle 1 comprising a frame 2 and at least two rubber tracked, preferably four, track systems 3 attached to frame 2.

Frame 2 can be a rigid frame and in this case the vehicle may be provided with steering wheels (not shown); or a hinged frame having a front part 4, a rear part 5 hinged to front part 4 about axis A and a steering unit (not shown), preferably a hydraulic steering unit comprising linear actuators, to control the relative angular position of front part 4 with respect to rear part 5 about axis A.

Each track system 3 comprises a rubber track 6, a drive wheel 7 extending from a differential (not shown) for driving track 6 and an undercarriage 8 pivoting with respect to frame 2. Undercarriage 8 comprises a front idler wheel 9, a rear idler wheel 10 about which track 6 is wrapped, roller wheels 11, 12, 13 for guiding track 6, all of which are supported by an undercarriage beam 14, which extends fore-and-aft, and to which wheels 11, 12, 9 and 10 are coupled. While the "front idler wheel," "rear idler wheel," "roller wheel" are singular terms, a plurality of wheels may be provided at each relative position in side-to-side orientation, such as in this embodiment. Advantageously, in order to provide a better contact surface with rubber track 6, at least wheels 11, 12, 13, 9 and 10 are twin wheels, i.e. each wheel comprises two wheels coupled side-to-side.

In particular undercarriage beam 14 is connected to frame 2 in order to tilt in a plane parallel to axis A and oriented fore-and-aft when vehicle 1 travels along a straight path. Preferably undercarriage beam 14 is hinged to frame 2 in order to tilt for a maximum of 15 degrees with respect to a neutral position shown in figure 1. Instead drive wheel 7 is fixed to frame 2.

Each track system 3 further comprises a tilting linkage 20 to connect at least roller wheels 11, 12 to undercarriage beam 14 in order to provide one or more degrees of freedom to such rollers with respect to beam 14 and one with respect to the other. In particular, tilting linkage 20 is hinged to beam 14 about axis B, which is fixed to beam 14. Linkage 20 is such to have at least a first and a second arm joined one to the other in order to have either angular or translation and angular relative degrees of freedom.

Furthermore tilting linkage 20 is attached to a roller wheel motion limiter 21 that hinders the relative motion of rollers 11, 12 with respect to the relative degree of freedom.

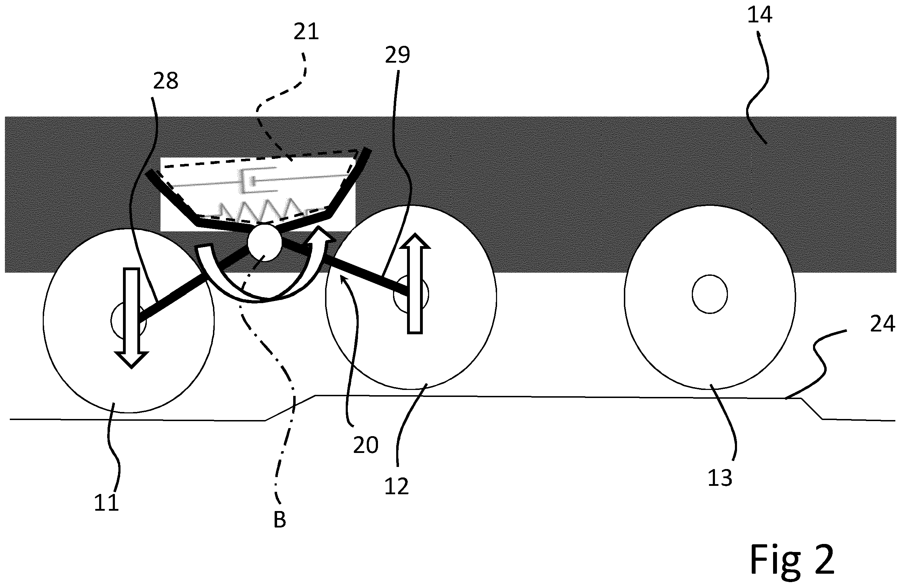

In a first embodiment, limiter 21 is a passive elastic and/or damping element that applies an elastic and/or damping action at least when rollers 11, 12 move one with respect to the other when loaded by track 6, e.g. when the latter climbs on an obstacle 24 and, consequently, a load is applied on the leading roller wheel. When this happens, limiter 21 hinders the relative motion of rollers 11, 12 such that an upwards motion of a leading roller, e.g. during climbing on obstacle 24 (figure 2), applies a downwards action on the adjacent trailing roller and vice versa, such action being transmitted through the limiter. Such action increases the pressure uniformity of track 6 on the ground

Preferably, the elastic and/or damping actions can be realized via inserts, e.g. a pack of discs, or bushings of a rubber material possibly reinforced either by particles or fibres or by one or more woven or non-woven layers. Rubber inserts or bushings are loaded by either compression or shear or a combination of the two.

As an alternative embodiment, limiter 21 comprises an actuator that is actively controllable in a first and a second state. When actuator is controlled to keep the first state, tilting linkage 20 has a rigid or semi-rigid configuration according to which an upwards motion of a leading roller, e.g. during climbing on obstacle 24 (figure 2), applies a downwards action on the adjacent trailing roller and vice versa, such action being transmitted through the actuator. Such action increases the pressure uniformity of track 6 on the ground. Preferably, when the actuator is in the first state, such action is transmitted also because tilting linkage 21 tilts about axis B.

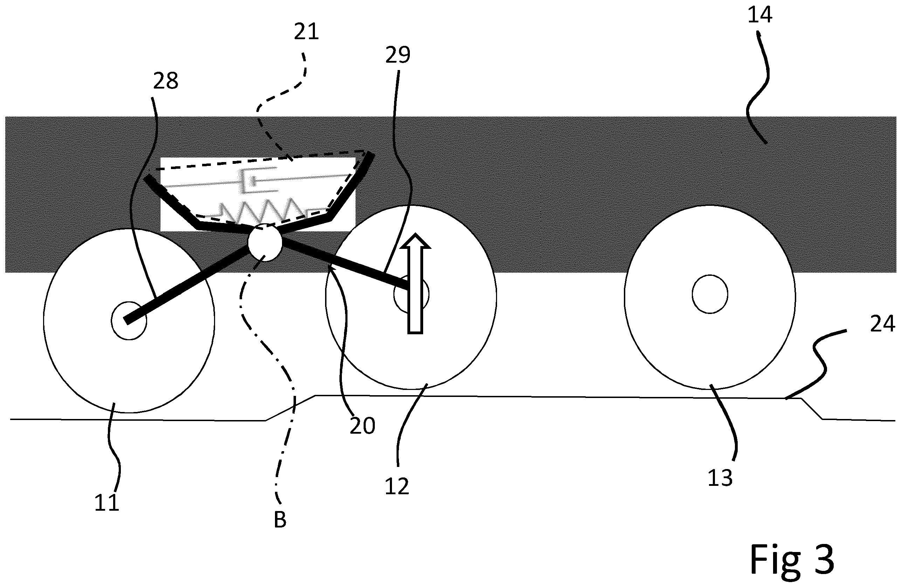

When the actuator is controlled to keep the second state, tilting linkage 20 has a loose or released configuration according to which the action of a leading roller is not transmitted or not significantly transmitted to a trailing roller (figure 3). In the loose configuration rollers 11, 12 are substantially independent one from the other except friction within tilting linkage 20 and/or actuator 21. In particular, when rubber trail 6 climbs on obstacle 24, rollers 11, 12 do not have any significant interaction. In order to limit the movement of rollers 11, 12 towards beam 14, tilting linkage 20 comprises stops 26 . In the loose configuration, tilting linkage 20 does not apply a significant action on the ground via track 6 when vehicle 1 is running.

The actuator can be of any kind suitable to keep the first state and, thus, a rigid or semi-rigid configuration of tilting linkage 20.

The actuator can be a single effect actuator and this realizes the semi-rigid configuration of tilting linkage. When control valve is closed, a single effect actuator blocks the single relative degree of freedom in one direction and does not block the same single relative degree of freedom in the opposite direction. The actuator can also be a double effect actuator and, thus, blocks the single relative degree of freedom in both directions.

According to the preferred embodiment of figure 2, single relative degree of freedom is angular and, when actuator 21 is single effect, counter clock-wise relative rotation is blocked and clock-wise relative rotation is permitted. When actuator 21 is double effect, no relative rotation is permitted.

In addition, the actuator can be controlled and/or designed to provide a shock absorbing effect having an elastic stiffness and/or damping. For example, elastic stiffness is obtained by leakless compression of the fluid that powers the linear actuator. In case the fluid is air, such stiffness is lower with respect to that obtained when fluid is hydraulic. Damping can be obtained by applying a calibrated orifice through which the fluid flows along the fluid line. Cross section of such an orifice can be either constant or controlled to change over time. In this way it is possible to change the damping properties of the actuator.

Limiter 21 is preferably carried by tilting linkage 20 and therefore translates and rotates with respect to beam 14. Preferably tilting linkage 21 is articulated so that rollers 11, 12 have a single relative degree of freedom and actuator 21 is mounted on tilting linkage 21 to either block or release such relative degree of freedom. In such a case, limiter 21 is preferably linear, e.g. a gas spring or a linear pneumatic or hydraulic actuator powered by a pressurized fluid line of vehicle 1 and controlled by a relative valve (not shown). However, it is also possible that limiter 21 is a passive torque limiter comprising friction bushings, e.g. rubber bushings, fitted in the hinges of linkage 20.

Preferably, limiter 21 is preloaded or controlled in order to increase the tension of the track after mounting of the latter about drive wheel 7 and idler wheels 9, 10.

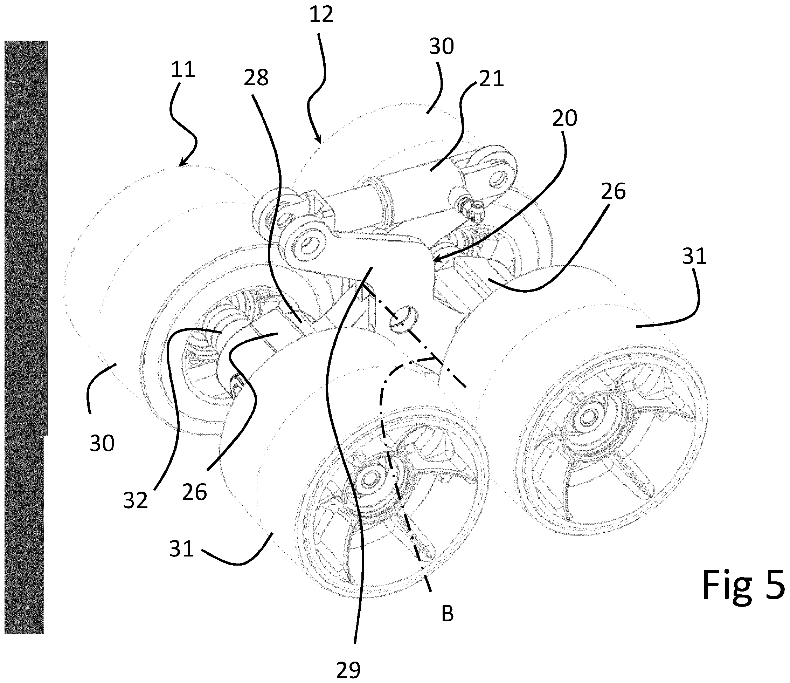

According to a preferred embodiment of the present invention, tilting linkage 20 comprises a first and a second arm 28, 29 respectively attached to rollers 11, 12 to define a scissor linkage. Arms 28, 29 are hinged about axis B and actuator 21 is attached to arms 28, 29 on opposite side of that of rollers 11, 12 with respect to hinge axis B. As shown in figure 2, limiter 21 is attached to arms 28, 29 so that, in case of a single effect actuator, contraction of actuator shall be blocked in order to obtain a semi-rigid configuration when the actuator is the first state. According to the embodiment in figure 5, stops 26 are located on arms 28, 29.

Preferably, rollers 11, 12 comprise a first and a second wheel 30, 31 rigidly connected one to the other by a shaft 32. Each shaft 32 is pivotably attached to the relative arm 28, 29 in order to provide a rotational degree of freedom about and axis that is co-planar to a mid-plane of track 6 and/or of shaft 32.

Preferably, pivoting axis of shaft 32 is defined by a pin 33, in particular a screwable pin, attached in a dedicated seat within the relative arm 28, 29. Shaft 32 is attached to pin 33. In order to restore a neutral position, i.e. a position wherein shaft 32 is substantially parallel to axes of drive wheel 7 and idler wheels 9, 10, a resilient element 34 acts on shaft 32. Preferably resilient element is housed at least in part or wholly within the relative arm 28, 29. According to one embodiment, resilient element 34 comprises rubber bushings, or a pack of rubber discs or the like and is coaxial to shaft 32.

It is preferable that tilting linkage 20 and limiter 21 are designed such that, when travelling on a paved street, at least front idler wheel 9, preferably also idler wheel 10, are lifted from the paved surface. Without a prejudice to the stability of the work vehicle, this decreases wear on rubber track 6. In order to do so when tilting linkage 20 is according to figure 2 and limiter 21 is an actuator, the latter shall be a double effect actuator. Indeed, in order to suspend from a paved street one or both idler wheels 9, 10, the actuator shall be powered to reduce its length. In case of a passive limiter, the latter shall be pre-loaded to provide the desired effect.

The advantages of a track system according to the present invention are the following.

The provision of tilting linkage 20 to connect rollers 11, 12 to beam 14 provides an additional degree of freedom that can be controlled either in a passive or active way in order to increase pressure uniformity when the ground is not uniformly soft and small, hard obstacles are dispersed.

Indeed tilting of linkage 20 and hindered motion of the linkage itself is such to avoid tension peaks within track 6.

Tilting of wheels 30, 31 provides an additional degree of freedom so that the rubber track 6 adapts more easily to the ground.

It is clear that changes and variations are applicable to the work vehicle according to the present invention without departing from the scope of protection as defined in the attached claims.

For example, track 6 can be arranged along a triangular path, as shown e.g. in figure 1, or along other paths. This may increase or reduce the number of idler wheels with respect to the embodiments discussed in the preceding paragraphs.

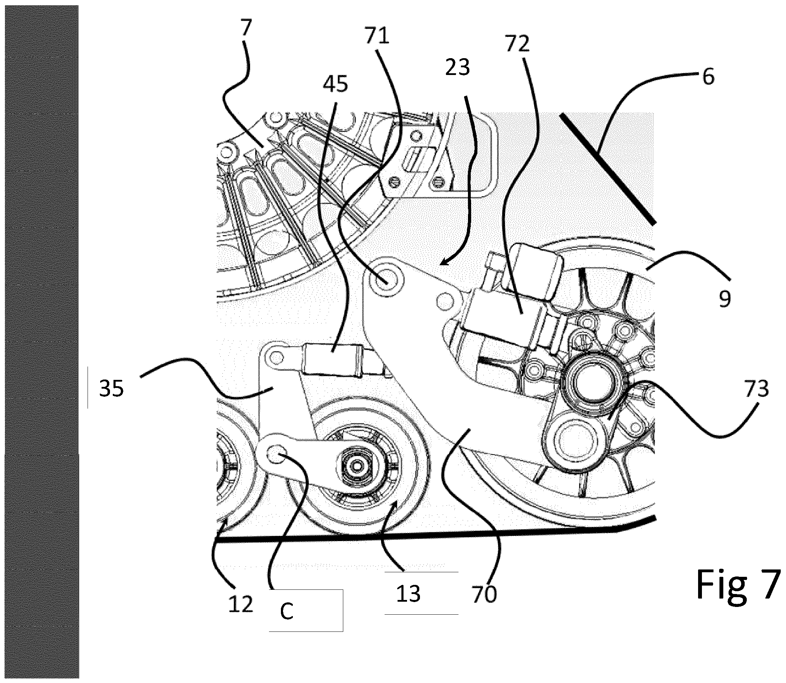

Figure 7 shows an additional device provided in track system 3 according to the present invention. In particular, front idler wheel 9 is tilting with respect to undercarriage beam 14 and is attached to roller wheel 11 via a linkage 23 in order to obtain the effect that if leading idler wheel 9 moves down, the trailing roller wheel 11 moves up via linkage 23 and vice versa.

In particular, a tilting arm 70 is connected via hinge 71 to undercarriage beam 14 and carries front idler wheel 9. Tilting arm 70 also carries a controllable tensioning apparatus 72, known in the art, to control the position of idler wheel 9 with respect to undercarriage beam 14. Preferably tensioning apparatus 72 comprises a pivoting link 73 connected to idler wheel 9 so that the latter is movable with respect to tilting arm 70, and a tensioner or an actuator, preferably an hydraulic actuator, attached to idler wheel 9 or link 73 in order to apply a force and, thus, adjust the tension of track 6.

In order to obtain the effect cited above, roller wheel 13 is attached to a shaped arm 35, preferably an 'L' shaped arm, and connected to tilting arm 70 via link 45. In particular, tilting arm 35 is hinged to undercarriage beam 14 about axis C parallel to axis B and link 45 can be an elastic or visco-elastic connection, and/or passive, i.e. a spring, or active, i.e. an actuator.

It is possible to retrofit existing work vehicles with a kit comprising at least the undercarriage beam 14, tilting linkage 20 and limiter 21.

Arms 28, 29 may constrain relative rollers 11, 12 to follow a trajectory that is superimposable and offset, e.g. there is the same distance from axis B to center point of the relative roller 11, 12 (this embodiment is shown in the figures), or may constrain relative rollers 11, 12 to follow different trajectories that cannot be superimposable, e.g. there is a different distance from axis B to center point of the relative roller 11, 12. Consistently, limier 21 can be attached to arms 28, 29 so as that the distance from axis B and respective attaching points between the actuator and the arms may be equal or different from one arm to the other.

Limiter 21 may comprise a rubber block attached, in particular hinged to axis B.

## Claims

1. Track system (3) for a work vehicle, comprising a driving wheel (7), an undercarriage beam (14) hinged to a frame (2) of the vehicle, at least one idler wheel (9), at least a first and a second roller wheels (11, 12) attached to the undercarriage beam (14) and a rubber track (6) wound about at least driving wheel (7), idler wheel (9), first and second roller wheels (11, 12), **characterized by** comprising a tilting linkage (20), hinged to the undercarriage beam (14) about axis B, to attach first and second roller wheels (11, 12) to the undercarriage beam (14) so that first and second roller wheels (11, 12) are movable one with respect to the other at least in certain working conditions, and an actuator (21) attached to the tilting linkage (20) to arms (28 , 29) at opposite side of the rollers (11, 12), such that, during tilting of the linkage when a load is applied on one roller wheel, a loading action is applied from the first to second roller wheel (11, 12) through the limiter (21) to increase the pressure uniformity of the track on the ground and whereby the actuator (21) is actively controllable in a first, rigid or semi-rigid state of the tilting linkage (20) and a second, loose or released state of the tilting linkage (20).

2. Track system according to claim 1, wherein tilting linkage (20) is such to constrain the first and the second roller wheel (11, 12) to have a relative degree of freedom, the actuator (21) being connected to tilting linkage (20) in order to apply a spring action and/or a damping action relative to that degree of freedom.

3. Track system according to any of the preceding claims, wherein the actuator (21) is supported by the tilting linkage (20).

4. Track system according to claim 1, wherein the actuator (21) is linear.

5. Track system according to any of the preceding claims, wherein at least one roller wheel comprises a first and a second wheels (30, 31), and a shaft (32) to connect first and second wheels (30, 31), the shaft being pivotally attached to a relevant tilting linkage (20).

6. Track system according to claim 5, wherein a spring (34) is provided to restore a neutral position of the shaft (32) such that the shaft is substantially parallel to axes of the idler wheel and/or the driving wheel (9, 7).

7. Track system according to any of the preceding claims, further comprising a linkage (23) attached to the undercarriage beam (14) to connect the idler wheel (9) and a further roller (13) so that when the idler roller (9) moves down, the further roller wheel (13) moves up via linkage (23), and vice-versa.

8. Track system according to claim 7, wherein the linkage (23) comprises an actuator or an elastic or visco-elastic link hinged to transfer a load from the idler wheel (9) to the further roller wheel (13).

9. Method of retrofitting a work vehicle with a track system (3) according to any of the preceding claims.

10. Method according to claim 9, wherein each of the first and second roller wheels (11, 12) are twin-wheels.

## Patentansprüche

1. Raupenfahrwerksystem (3) für ein Arbeitsfahrzeug mit einem Antriebsrad (7), einem Fahrwerksträger (14), der gelenkig an einem Rahmen (2) des Fahrzeugs angebracht ist, zumindest einem Leitrad (9), zumindest einer ersten und einer zweiten Laufrolle (11, 12), die am Fahrwerksträger (14) angebracht sind, und einer Gummiraupe (6), die zumindest um das Antriebsrad (7), das Leitrad (9), und die erste und die zweite Laufrolle (11, 12) herumgeführt ist, **dadurch gekennzeichnet, dass** es eine schwenkbare Verbindung (20) umfasst, die um eine Achse (B) gelenkig mit dem Fahrwerksrahmen (14) verbunden ist, um die erste und die zweite Laufrolle (11, 12) am Fahrwerksrahmen (14) derart anzubringen, dass die erste und die zweite Laufrolle (11, 12) zumindest in bestimmten Betriebszuständen zueinander beweglich sind, und dass es einen Stellantrieb (21) umfasst, der an der schwenkbaren Verbindung (20) an Armen (28, 29) an Enden, die den Rollen (11, 12) gegenüberliegen, angebracht ist, sodass während des Schwenkens der Verbindung, wenn eine Last auf eine Laufrolle ausgeübt wird, durch die Begrenzungseinrichtung (21) eine Last von der ersten auf die zweite Laufrolle (11, 12) ausgeübt wird, um die Gleichmäßigkeit des Drucks der Raupe auf den Boden zu erhöhen, und wobei der Stellantrieb (21) aktiv in einen ersten starren oder halb-starren Zustand der schwenkbaren Verbindung (20) und einen zweiten losen oder gelösten Zustand der schwenkbaren Verbindung (20) steuerbar ist.

2. Raupenfahrwerksystem nach Anspruch 1, wobei die schwenkbare Verbindung (20) die erste und die zweite Laufrolle (11, 12) derart einschränkt, dass sie einen relativen Freiheitsgrad aufweisen, wobei der Stellantrieb (21) mit der schwenkbaren Verbindung (20) verbunden ist, um eine Federwirkung und/oder eine Dämpfwirkung relativ zu diesem Freiheitsgrad auszuüben.

3. Raupenfahrwerksystem nach einem der vorangehenden Ansprüche, wobei der Stellantrieb (21) von der schwenkbaren Verbindung (20) getragen wird.

4. Raupenfahrwerksystem nach Anspruch 1, wobei der Stellantrieb (21) linear ist.

5. Raupenfahrwerksystem nach einem der vorangehenden Ansprüche, wobei zumindest eine Laufrolle ein erstes und ein zweites Rad (30, 31) und eine Welle (32) zum Verbinden des ersten und des zweiten Rads (30, 31) umfasst, wobei die Welle drehbar an der jeweiligen schwenkbaren Verbindung (20) angebracht ist.

6. Raupenfahrwerksystem nach Anspruch 5, wobei eine Feder (34) vorgesehen ist, um eine neutrale Position der Welle (32) wiederherzustellen, sodass die Welle im Wesentlichen parallel zu den Achsen des Leitrads und/oder des Antriebsrads (9, 7) ist.

7. Raupenfahrwerksystem nach einem der vorangehenden Ansprüche, weiterhin umfassend ein Verbindungselement (23), das am Fahrwerksträger (14) angebracht ist, um das Leitrad (9) und eine weitere Rolle (13) derart zu verbinden, dass sich die weitere Rolle (13) mittels des Verbindungselements (23) nach oben bewegt, wenn sich das Leitrad (9) nach unten bewegt und umgekehrt.

8. Raupenfahrwerksystem nach Anspruch 7, wobei das Verbindungselement (23) einen Stellantrieb oder ein elastisches oder viskoelastisches Bindeglied umfasst, die gelenkig gelagert sind, um eine Last vom Leitrad (9) auf die weitere Rolle (13) zu übertragen.

9. Verfahren zum Nachrüsten eines Arbeitsfahrzeugs mit einem Raupenfahrwerksystem (3) nach einem der vorangehenden Ansprüche.

10. Verfahren nach Anspruch 9, wobei sowohl die erste als auch die zweite Laufrolle (11, 12) Zwillingsrollen sind.

## Revendications

1. Système de chenilles (3) pour engin de chantier, comprenant une roue d'entraînement (7), une traverse de train de roulement (14) articulée sur un cadre (2) de l'engin, au moins une roue folle (9), au moins un premier et un deuxième galet de roulement (11, 12) fixés à la traverse de train de roulement (14) et une chenille d'entraînement en caoutchouc (6) enroulée autour d'au moins une roue d'entraînement (7), une roue folle (9), des premier et deuxième galets de roulement (11, 12), **caractérisé en ce que** la méthode comprend une tringlerie de basculement (20) articulée sur la traverse de train de roulement (14) autour de l'axe B, afin d'attacher les premier et deuxième galets de roulement (11, 12) à la traverse de train de roulement (14) de manière à ce que les premier et deuxième galets de roulement (11, 12) soient mobiles les uns par rapport aux autres dans au moins certaines conditions de travail, et un actionneur (21) fixé à la tringlerie de basculement (20) et des bras (28, 29) sur le côté opposé des galets (11, 12), de manière à ce que, pendant le basculement de la tringlerie, lorsqu'une charge est appliquée à un galet de roulement, le premier galet de roulement applique une action de charge sur le deuxième galet de roulement (11, 12) par le biais du limiteur (21) afin d'augmenter l'uniformité de pression de la chenille au sol et où l'actionneur (21) peut être commandé activement dans un premier état rigide ou semi-rigide de la tringlerie de basculement (20) et dans un deuxième état souple ou libéré de la tringlerie de basculement (20).

2. Système de chenilles selon la revendication 1, dans lequel la tringlerie de basculement (20) est configurée de manière à limiter le premier et le deuxième galet de roulement (11, 12) à avoir un degré relatif de liberté, l'actionneur (21) étant relié à la tringlerie de basculement (20) afin de réaliser une action de ressort et/ou une action d'amortissement par rapport à ce degré de liberté.

3. Système de chenilles selon l'une quelconque des revendications précédentes, dans lequel l'actionneur (21) est supporté par de la tringlerie de basculement (20).

4. Système de chenilles selon la revendication 1, dans lequel l'actionneur (21) est linéaire.

5. Système de chenilles selon l'une quelconque des revendications précédentes, dans lequel au moins un galet de roulement comprend une première et une deuxième roue (30, 31) et un arbre (32) permettant de relier les première et deuxième roues (30, 31), l'arbre étant fixé en pivotement à une tringlerie de basculement correspondante (20).

6. Système de chenilles selon la revendication 5, dans lequel un ressort (34) est prévu pour rétablir une position neutre de l'arbre (32), de manière à ce que l'arbre soit sensiblement parallèle aux axes de la roue folle et/ou de la roue d'entraînement (9, 7).

7. Système de chenilles selon l'une quelconque des revendications précédentes, comprenant en outre une liaison (23) attachée à la traverse de train de roulement (14) afin de relier la roue libre (9) et un autre galet (13) de telle manière que, lorsque la roue folle (9) descend, l'autre galet de roulement (13) monte par le biais de la liaison (23) et vice versa.

8. Système de chenilles selon la revendication 7, dans lequel la liaison (23) comprend un actionneur ou un lien élastique ou viscoélastique fixé de manière à transférer une charge de la roue folle (9) à l'autre galet de roulement (13).

9. Méthode de mise en conformité d'un engin de chantier avec système de chenilles (3) selon l'une quelconque des revendications précédentes.

10. Méthode selon la revendication 9, dans laquelle chacun des premier et deuxième galets de roulement (11, 12) est une roue jumelée.
